# EUROPÄISCHE PATENTSCHRIFT

(11) **EP 3 795 815 B1**
(45) Veröffentlichungstag und Bekanntmachung des Hinweises auf die Patenterteilung: **21.05.2025**
(21) Anmeldenummer: 20194906.2
(22) Anmeldetag: 07.09.2020
(51) Int. Cl.: F02D 41/22, F02D 41/00, F02D 41/14, F02M 25/08

(54) **VERFAHREN ZUM BETREIBEN EINER BRENNKRAFTMASCHINE MIT IN EINE SPÜLGASLEITUNG INTEGRIERTEM HC-SENSOR**
METHOD FOR OPERATING A COMBUSTION ENGINE WITH HC SENSOR INTEGRATED INTO A PURGE GAS LINE
PROCÉDÉ DE FONCTIONNEMENT D'UN MOTEUR À COMBUSTION INTERNE DOTÉ D'UN CAPTEUR HC INTÉGRÉ DANS UNE CONDUITE DE GAZ DE PURGE

(30) Priorität: 18.09.2019 DE 102019214236
(43) Veröffentlichungstag der Anmeldung: 24.03.2021
(73) Patentinhaber: VOLKSWAGEN AG, 38440 Wolfsburg (DE)
(72) Erfinder: Lindlau, Michael, 38162 Cremlingen (DE); Brand, Michael, 38444 Wolfsburg (DE)

(56) Entgegenhaltungen:
- DE-A1- 102015 114 071
- DE-B4- 112011 103 454
- US-A1- 2011 313 642
- US-B1- 6 234 156
- US-B2- 7 316 225

## Beschreibung

Die Erfindung betrifft ein Verfahren zum Betreiben einer Brennkraftmaschine mit einem Kraftstofftanksystem, das einerseits einen Kraftstoffdampffilter umfasst, um eine bedarfsweise Entlüftung eines Kraftstofftanks des Kraftstofftanksystems zu ermöglichen, und das andererseits eine von dem Kraftstoffdampffilter zu einem Frischgasstrang der Brennkraftmaschine führende Spülgasleitung aufweist, um ein bedarfsweises Spülen des Kraftstoffdampffilters beziehungsweise des Kraftstofftanksystems an sich zu ermöglichen. Die Erfindung betrifft weiterhin eine zur Durchführung eines solchen Verfahrens geeignete Brennkraftmaschine sowie ein Kraftfahrzeug mit einer solchen Brennkraftmaschine.

Ein Kraftstofftanksystem für eine Brennkraftmaschine eines Kraftfahrzeugs weist regelmäßig eine Entlüftungsleitung auf, die es ermöglicht, den Kraftstofftank des Kraftstofftanksystems zu Entlüften, d.h. einen ansteigenden Druck in dem Kraftstofftank infolge von beispielsweise bei relativ hohen Umgebungstemperaturen verdampfendem Kraftstoff an die Umgebung zu entlasten. Dabei dürfen, auch aufgrund von Emissionsvorschriften, möglichst keine Kraftstoffdämpfe in die Umgebung gelangen. Dies wird verhindert, indem in die Entlüftungsleitung ein Kraftstoffdampffilter, der regelmäßig in Form eines Aktivkohlefilters ausgebildet ist, integriert ist, der die Kraftstoffdämpfe bei einem Entlüften des Kraftstofftanks absorbiert.

Ein solches Kraftstofftanksystem ist insbesondere zur Regeneration des Kraftstoffdampffilters zusätzlich mit einer Spülgasleitung versehen, die einerseits mit dem Kraftstoffdampffilter und andererseits mit dem Frischgasstrang der Brennkraftmaschine verbunden ist. Im Betrieb der Brennkraftmaschine kann zeitweise mittels Unterdrucks, der im Bereich der Mündung der Spülgasleitung in den Frischgasstrang im Vergleich zu dem Umgebungsdruck herrscht, Umgebungsluft über eine Umgebungsmündung des Kraftstoffdampffilters angesaugt werden. Diese Umgebungsluft durchströmt den Kraftstoffdampffilter dann in Gegenrichtung zu derjenigen Strömungsrichtung, in der die aus dem Kraftstofftank kommenden Kraftstoffdämpfe den Kraftstoffdampffilter durchströmt haben, wodurch der Kraftstoffdampffilter gespült wird. Die Kraftstoffdämpfe aus dem Kraftstoffdampffilter werden so über die Spülgasleitung und den Frischgasstrang den Brennräumen des Verbrennungsmotors der Brennkraftmaschine zugeführt.

Sofern der Massenstrom des über die Spülgasleitung in den Frischgasstrang und von diesem in die Brennräume eingebrachten Kraftstoffs nicht ausreichend exakt bekannt ist, kann ein solches Regenerieren beziehungsweise Spülen des Kraftstoffdampffilters dazu führen, dass der Verbrennungsmotor temporär mit einem Verbrennungsluftverhältnis betrieben wird, das von einem diesbezüglichen Sollwert abweicht. Dadurch können sich zumindest die Schadstoffrohemissionen des Verbrennungsmotors verschlechtern. Eine solche Verschlechterung der Schadstoffrohemissionen ist mittels eines Abgassensors, beispielsweise mittels einer Lambdasonde ermittelbar, was ermöglicht, basierend auf den Messwerten dieses Abgassensors die Kraftstoffmengen, die mittels Kraftstoffinjektoren in die Brennräume oder in den Frischgasstrang eingebracht werden, anzupassen, um auch während eines Spülens des Kraftstoffdampffilters ein Verbrennungsluftverhältnis einzustellen, das einem dazugehörigen Sollwert möglichst entspricht.

Nachteilig an dieser Vorgehensweise ist, dass die Anpassung der in die Brennräume eingebrachten Kraftstoffmengen erst dann erfolgt, wenn mittels des Abgassensors bereits relativ schlechte Schadstoffrohemissionen des Verbrennungsmotors ermittelt wurden.

Um diesen Nachteil zu vermeiden kann vorgesehen sein, den bei einem Spülen des Kraftstoffdampffilters über die Spülgasleitung in den Frischgasstrang eingebrachten Kraftstoffmassenstrom zu ermitteln, um proaktiv die mittels der Kraftstoffinjektoren in die Brennräume oder in den Frischgasstrang eingebrachten Kraftstoffmengen anzupassen. Dies bedingt eine möglichst exakte Kenntnis des über die Spülgasleitung geführten Spülgasmassenstroms sowie der Konzentration des Kraftstoffs, d.h. der Kohlenwasserstoffe, in diesem Spülgasmassenstrom.

Die Konzentration der Kohlenwasserstoffe in einem Spülgasmassenstrom kann mittels eines entsprechenden (HC-)Sensors direkt ermittelt werden. Ein solcher HC-Sensor kann jedoch eine relevante Messabweichung aufweisen. Weiterhin ist es sinnvoll, einen Defekt eines solchen HC-Sensors möglichst schnell nach dem Auftreten des Defekts ermitteln zu können, um einen länger andauernden Betrieb des Verbrennungsmotors mit deutlich von einem Sollwert abweichendem Verbrennungsluftverhältnis zu vermeiden.

Die DE 10 2010 048 313 A1 betrifft ein Verfahren zum Betreiben eines Tankentlüftungssystems, bei dem ein Spülgasmassenstrom, der in einer Spülgasleitung strömt, in Abhängigkeit von der Dichte des Spülgases und der Pumpencharakteristik einer Spülgasfördervorrichtung ermittelt wird. Dabei kann auch vorgesehen sein, mittels eines HC-Sensors eine Kohlenwasserstoffkonzentration des Spülgases zu ermitteln.

Die DE 10 2017 209 127 A1 offenbart ein Verfahren zum Berechnen eines Massenstroms eines Kraftstoff/Luft-Gemischs, das von einem Tankentlüftungssystem in ein Saugrohr eines Verbrennungsmotors überführt wird. Dabei wird ein Kraftstoff/Luft-Verhältnis des Massenstroms bei der Berechnung des Massenstroms berücksichtigt.

Die DE 10 2015 114 071 A1 beschreibt eine Brennkraftmaschine mit einem Ventilsteuermodul, einem Spülanteilmodul und einem Diagnosemodul. Das Ventilsteuermodul öffnet ein Spülventil in einem Verdunstungsemissionssystem, um eine Strömung von Spüldampf an ein Ansaugsystem der Brennkraftmaschine zu ermöglichen. Das Spülanteilmodul bestimmt einen ersten und zweiten Anteil von Spüldampf, die an die Kraftmaschine geliefert werden, relativ zu einem Gesamtbetrag von Luft und Spüldampf, der an die Brennkraftmaschine geliefert wird, auf der Grundlage einer ersten und zweiten Eingabe. Die erste Eingabe stammt von einem Kohlenwasserstoffsensor, der in dem Verdunstungsemissionssystem der Brennkraftmaschine angeordnet ist. Die zweite Eingabe stammt von einem Sauerstoffsensor, der in einem Abgassystem der Brennkraftmaschine angeordnet ist. Das Diagnosemodul diagnostiziert selektiv eine Störung in zumindest einem von dem Verdunstungsemissionssystem und dem Kohlenwasserstoffsensor auf Grundlage des ersten und zweiten Spülanteils, wenn das Spülventil offen ist.

Die DE 11 2011 103 454 B4 offenbart ein Verfahren zum Betreiben einer Brennkraftmaschine mit mindestens einem Zylinder, einem Abgasstrang, der eine Messvorrichtung aufweist, sowie einem Tankentlüftungssystem mit einer Spülluftleitung, die ausgebildet ist zur pneumatischen Kommunikation zwischen dem Tankentlüftungssystem und dem mindestens einen Zylinder und die mindestens einen Sensor zum Ermitteln eines Kohlenwasserstoffgehalts eines Gasstroms aufweist, mit den Verfahrensschritten:
- Ermitteln eines Kohlenwasserstoffgehalts eines von dem Tankentlüftungssystem zu dem mindestens einen Zylinder strömenden Gasstroms abhängig von einem Messsignal des Sensors,
- Steuern einer Kraftstoffzumessung in den mindestens einen Zylinder abhängig von dem ermittelten Kohlenwasserstoffgehalt,
- Erfassen einer Abgaskenngröße eines Abgasstroms, der in dem Abgasstrang strömt, mittels der Messvorrichtung,
- Vergleichen der Abgaskenngröße mit einem vorgegebenen Sollwert und,
- **falls** der ermittelte Differenzbetrag zwischen der erfassten Abgaskenngröße und dem vorgegebenen Sollwert einen vorgegebenen Grenzwert überschreitet, prüfen, ob der Sensor eine Fehlfunktion aufweist, umfassend:
   - Ermitteln des Kohlenwasserstoffgehalts des Gasstroms in einem vorgegebenen Betriebsbereich der Brennkraftmaschine,
   - Vergleichen des so ermittelten Kohlenwasserstoffgehalts mit einem für den Betriebsbereich vorgegebenen spezifischen Kohlenwasserstoff-Sollwert und
   - Ermitteln, ob der Sensor die Fehlfunktion aufweist, abhängig von einer Abweichung zwischen dem ermittelten Kohlenwasserstoffgehalt und dem vorgegebenen spezifischen Kohlenwasserstoff-Sollwert.

Die US 2011/0313642 A1 offenbart ein Verfahren, durch das ein Einfluss einer Kurbelgehäuseentlüftung beziehungsweise von in die Brennräume einer Brennkraftmaschine einströmenden Blowby-Gasen auf die Verbrennung kompensiert werden soll.

Der Erfindung lag die Aufgabe zugrunde, Messabweichungen eines in eine Spülgasleitung eines Kraftstofftanksystems einer Brennkraftmaschine integrierten HC-Sensors zu korrigieren und/oder einen Defekt eines solchen HC-Sensors zu ermitteln.

Diese Aufgabe wird durch ein Verfahren gemäß dem Patentanspruch 1 gelöst. Eine zur Durchführung eines solchen Verfahrens geeignete Brennkraftmaschine ist Gegenstand des Patentanspruchs 5. Vorteilhafte Ausführungsformen des erfindungsgemäßen Verfahrens und bevorzugte Ausgestaltungsformen der erfindungsgemäßen Brennkraftmaschine sind Gegenstände der weiteren Patentansprüche und/oder ergeben sich aus der nachfolgenden Beschreibung der Erfindung.

Erfindungsgemäß ist ein Verfahren zum Betreiben einer Brennkraftmaschine vorgesehen, wobei die Brennkraftmaschine zumindest folgende Komponenten umfasst:
- einen vorzugsweise fremdgezündeten und quantitätsgeregelten Verbrennungsmotor (z.B. einen Ottomotor), der mindestens einen Brennraum und vorzugsweise eine Mehrzahl von Brennräumen aufweist,
- einen Frischgasstrang zum Zuführen von Frischgas zu dem Verbrennungsmotor,
- einen Abgasstrang zum Abführen von Abgas von dem Verbrennungsmotor mit darin integriertem Abgassensor, beispielsweise in Form einer sogenannten Lambdasonde, und
- ein Kraftstofftanksystem.

Das Kraftstofftanksystem umfasst dabei zumindest
- einen Kraftstofftank,
- einen Kraftstoffdampffilter, der in fluidleitender Verbindung mit einer Umgebungsmündung steht,
- eine von dem Kraftstofftank zu dem Kraftstoffdampffilter führende Entlüftungsleitung und
- eine von dem Kraftstoffdampffilter zu dem Frischgasstrang führende Spülgasleitung, in die
   - einerseits ein HC-Sensor und
   - andererseits ein Tankentlüftungsventil, mittels dessen der Massenstrom des über die Spülgasleitung geführten Spülgases durch eine mehr oder weniger oder nicht erfolgende Drosselung einstellbar ist, und/oder eine Spülgasfördervorrichtung, mittels der das Spülgas bedarfsweise aktiv durch die Spülgasleitung förderbar ist,
   integriert sind.

Erfindungsgemäß ist vorgesehen, dass im Betrieb der Brennkraftmaschine bei über die Spülgasleitung geführtem Spülgas der Kohlenwasserstoffgehalt des Spülgases mittels des HC-Sensors sowie der Massenstrom des Spülgases und aus diesen Werten in Kombination ein Kraftstoffmassenstrom, der in den Frischgasstrang eingeleitet wird, ermittelt werden. Weiterhin wird dabei eine Menge von mittels mindestens eines Kraftstoffinjektors in den Brennraum und/oder in den Frischgasstrang eingebrachtem Kraftstoff angepasst, um unter Berücksichtigung einer definierten Gesamtmenge an Kraftstoff, die dem Brennraum je Arbeitsspiel zugeführt werden soll, die zusätzliche, über das Spülgas eingebrachte Kraftstoffmenge auszugleichen.

Weiterhin ist erfindungsgemäß vorgesehen, dass aus einer mittels des Abgassensors ermittelten Abgaszusammensetzung das (gemittelte) Verbrennungsluftverhältnis von Kraftstoff-Frischgas-Gemischmengen, die dem Brennraum zugeführt wurden, hinsichtlich einer Abweichung von einem Sollwert (der insbesondere einem stöchiometrischen Verbrennungsluftverhältnis entsprechen kann), die trotz der Anpassung des mittels des Kraftstoffinjektors eingebrachten Kraftstoffs auftreten kann, überwacht wird. Sofern eine solche Abweichung ermittelt wird, wird erfindungsgemäß eine Korrektur des Messwerts des HC-Sensors oder des daraus ermittelten Kraftstoffmassenstroms durchgeführt oder der HC-Sensor wird als defekt ermittelt beziehungsweise beurteilt. Dabei ist vorgesehen, dass eine Korrektur des Messwerts des HC-Sensors oder des daraus ermittelten Kraftstoffmassenstroms durchgeführt wird, sofern die Abweichung unterhalb eines Schwellenwerts liegt oder diesem Schwellenwert entspricht, und der HC-Sensor als defekt ermittelt wird, sofern die Abweichung oberhalb eines (anderen) oder des(selben) Schwellenwerts liegt.

Eine erfindungsgemäße Brennkraftmaschine umfasst einerseits zumindest
- einen vorzugsweise fremdgezündeten und quantitätsgeregelten Verbrennungsmotor mit mindestens einem Brennraum und vorzugsweise mit einer Mehrzahl von Brennräumen,
- einen Frischgasstrang zum Zuführen von Frischgas zu dem Verbrennungsmotor,
- einen Abgasstrang zum Abführen von Abgas von dem Verbrennungsmotor, wobei in den Abgasstrang ein Abgassensor integriert ist, und
- ein Kraftstofftanksystem, das zumindest
   - einen Kraftstofftank,
   - einen Kraftstoffdampffilter, der in fluidleitender Verbindung mit einer Umgebungsmündung steht,
   - eine von dem Kraftstofftank zu dem Kraftstoffdampffilter führende Entlüftungsleitung,
   - eine von dem Kraftstoffdampffilter zu dem Frischgasstrang führende Spülgasleitung, in die
      - einerseits ein HC-Sensor sowie
      - andererseits ein Tankentlüftungsventil und/oder eine Spülgasfördervorrichtung
      integriert sind.

Weiterhin weist eine erfindungsgemäße Brennkraftmaschine eine Steuerungsvorrichtung auf, die zur automatisierten Durchführung eines erfindungsgemäßen Verfahrens ausgebildet ist.

Die Bezeichnung "Kraftstoffdampffilter" bedingt erfindungsgemäß nicht, dass dieser den flüchtigen Kraftstoff in gasförmiger Form filtern muss. Vielmehr kann der Kraftstoff bei der Filterung auch schon wieder (teilweise) auskondensiert sein.

Eine Ermittlung des Massenstroms des Spülgases im Rahmen eines erfindungsgemäßen Verfahrens kann einerseits (ausschließlich) durch eine oder mehrere Messungen realisiert werden. Eine erfindungsgemäße Brennkraftmaschine kann dann einen oder mehrere entsprechende Sensoren umfassen. Weiterhin kann eine solche Ermittlung auch durch eine Modellierung, d.h. durch eine rechnerische Ermittlung basierend auf (ggf. gemessenen) Betriebsparametern einzelner oder mehrerer Komponenten der Brennkraftmaschine, beispielsweise basierend auf der Öffnungsstellung des Tankentlüftungsventils und/oder einer Antriebsleistung der Spülgasfördervorrichtung, durchgeführt werden.

Der Erfindung liegt die Erkenntnis zugrunde, dass sich mittels eines in den Abgasstrang integrierten Abgassensors in vorteilhafter Weise Messabweichungen des HC-Sensors ermitteln und/oder die Funktionsfähigkeit des HC-Sensors überprüfen lässt/lassen. Besonders vorteilhaft ist dabei, dass ein solcher Abgassensor, typischerweise zumindest in Form einer Lambdasonde, üblicherweise ohnehin bei einer Brennkraftmaschine vorgesehen ist, so dass für die Durchführung eines erfindungsgemäßen Verfahrens im Wesentlichen keine zusätzlichen strukturellen Komponenten der Brennkraftmaschine erforderlich sind.

Grundsätzlich besteht die Möglichkeit, dass auch der Abgassensor nicht exakte Messwerte liefert oder Abweichungen des Verbrennungsluftverhältnisses von dem Sollwert, die basierend auf einer mittels des Abgassensors ermittelten Abgaszusammensetzung ermittelt wurden, auf anderen "Fehlerquellen" im Betrieb des Verbrennungsmotors zurückzuführen sind. Um zu vermeiden, dass sich dies negativ auf die erfindungsgemäße Funktionsprüfung, d.h. auf die mögliche Korrektur des Messwerts des HC- Sensors oder des daraus ermitteln Kraftstoffmassenstroms oder auf die mögliche Ermittlung des HC Sensors als defekt, auswirkt, kann vorzugsweise vorgesehen sein, dass im Betrieb der Brennkraftmaschine bei deaktivierter Spülung des Kraftstofftanksystems, d.h., wenn kein Spülgas über die Spülgasleitung geführt wird, eine Eichung des Messwerts des Abgassensors durchgeführt wird. Folglich kann dann, wenn infolge einer deaktivierten Spülung des Kraftstofftanksystems kein Spülgas über die Spülgasleitung geführt wird, der Messwert des Abgassensors derart abgeglichen und gegebenenfalls angepasst werden, dass sich bei dann ausschließlich über den oder die Kraftstoffinjektoren in den Brennraum oder die Brennräume eingebrachtem, ausreichend exakt ermittelbarem Kraftstoff - in Verbindung mit dem Brennraum ebenfalls zugeführtem, ausreichend exakt ermittelbarem Sauerstoff - das sich daraus ergebende Verbrennungsluftverhältnis einer definierten, zugehörigen Abgaszusammensetzung entspricht. Aufgrund einer solchen Eichung des Messwerts des Abgassensors kann dann mit ausreichender Sicherheit davon ausgegangen werden, dass bei über die Spülgasleitung geführtem Spülgas, d.h. bei einer Spülung des Kraftstofftanksystems, eine basierend auf dem Messwert des Abgassensors ermittelte Abweichung des Verbrennungsluftverhältnisses von dem dazugehörigen Sollwert auf einen Messfehler des HC-Sensors und damit auf einer daraus folgenden, fehlerhaften Anpassung von mittels des Kraftstoffinjektors in den Brennraum und/oder in den Frischgasstrang eingebrachtem Kraftstoff resultiert.

In Abhängigkeit davon, wie der Massenstrom des Spülgases ermittelt wird, kann diese Schlussfolgerung zusätzlich erfordern, dass im Betrieb der Brennkraftmaschine bei deaktivierter Spülung des Kraftstofftanksystems auch eine Eichung des Messwerts eines Sensors, der zur Ermittlung des Massenstroms des Spülgases genutzt wird, durchgeführt wird. Dies kann beispielsweise der Fall sein, wenn zur Ermittlung des Massenstroms des Spülgases ein in die Spülgasleitung integrierter Drucksensor genutzt wird. Dessen Messwert kann dann im Betrieb der Brennkraftmaschine bei deaktivierter Spülung beispielsweise durch einen Abgleich mit dem Umgebungsdruck überprüft und gegebenenfalls geeicht werden.

Wird der Massenstrom des Spülgases bei aktiver Spülung des Kraftstofftanksystems dagegen beispielsweise dadurch ermittelt, dass in den Frischgasstrang mindestens zwei Sensoren integriert sind, mittels derer der Massenstrom des Frischgases in dem Frischgasstrang einerseits stromauf und andererseits stromab der Mündung der Spülgasleitung ermittelt werden kann, so kann deren potentieller Einfluss auf eine Abweichung des Messwerts des Abgassensors bei aktiver Spülung dadurch ausgeschlossen werden, dass deren Messwerte bei der Eichung des Messwerts des Abgassensors bei deaktivierter Spülung berücksichtigt wurden.

Das während einer Spülung des Kraftstofftanksystems über die Spülgasleitung geführte Spülgas kann insbesondere eine Mischung aus gasförmigem Kraftstoff beziehungsweise gasförmigen Kohlenwasserstoffen sowie Umgebungsluft sein, wie dies der Fall ist, wenn der Kraftstoffdampffilter durch Rückspülung unter Verwendung von Umgebungsluft regeneriert wird. Gegebenenfalls kann das Spülgas aber auch (im Wesentlichen) ausschließlich aus gasförmigem Kraftstoff beziehungsweise aus gasförmigen Kohlenwasserstoffen bestehen, beispielsweise wenn in dem Kraftstofftank vorhandene Kraftstoffdämpfe nicht in die Umgebung sondern unmittelbar in den Frischgasstrang "entlüftet" werden.

Eine erfindungsgemäße Brennkraftmaschine kann insbesondere Teil eines Kraftfahrzeugs sein. Dabei kann der Verbrennungsmotor der Brennkraftmaschine insbesondere zur direkten oder indirekten Bereitstellung der Antriebsleistung für das Kraftfahrzeug vorgesehen sein. Die Erfindung betrifft daher weiterhin ein Kraftfahrzeug, insbesondere ein radbasiertes und nicht schienengebundenes Kraftfahrzeug (vorzugsweise ein PKW oder ein LKW), mit einer erfindungsgemäßen Brennkraftmaschine.

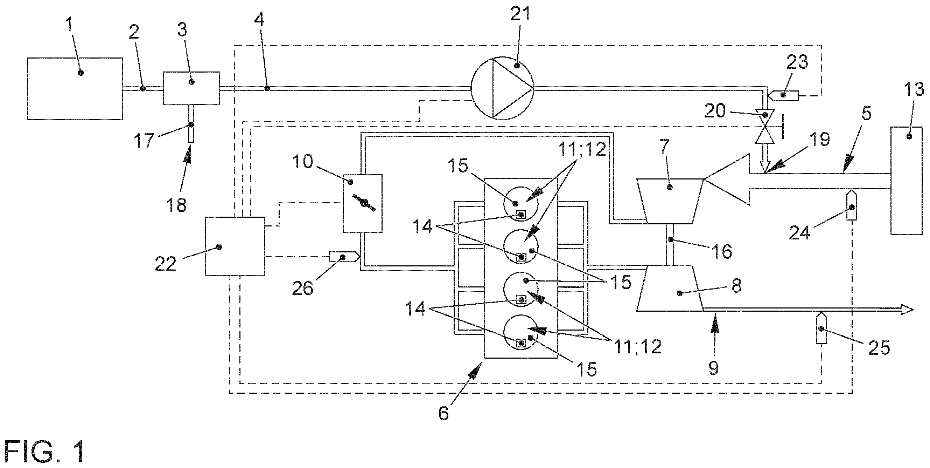

Die Erfindung wird nachfolgend anhand eines in den Zeichnungen dargestellten Ausgestaltungs- und Ausführungsbeispiels näher erläutert. In der Zeichnung zeigt die
- Fig. 1: eine erfindungsgemäße Brennkraftmaschine in schematischer Darstellung.

Die Fig. 1 zeigt eine erfindungsgemäße Brennkraftmaschine für ein Kraftfahrzeug mit einem Kraftstofftanksystem. Dieses umfasst einen Kraftstofftank 1, der über eine Entlüftungsleitung 2 mit einem Kraftstoffdampffilter 3, der insbesondere in Form eines Aktivkohlefilters ausgebildet sein oder einen solchen zumindest umfassen kann, verbunden ist. Der Kraftstoffdampffilter 3 ist weiterhin über eine Spülgasleitung 4 mit einem Frischgasstrang 5 der Brennkraftmaschine verbunden, wobei die Spülgasleitung 4 in den Frischgasstrang 5 stromauf (bezüglich der Strömungsrichtung von Frischgas in dem Frischgasstrang 5 in Richtung eines Verbrennungsmotor 6 der Brennkraftmaschine) eines in den Frischgasstrang 5 integrierten Frischgasverdichters 7 mündet. Der Frischgasverdichter 7 ist Teil eines Abgasturboladers, der weiterhin eine Abgasturbine 8 umfasst, die in einen Abgasstrang 9 der Brennkraftmaschine integriert ist. In der zwischen dem Frischgasverdichter 7 und dem Verbrennungsmotor 6 gelegenen Ladeluftstrecke des Frischgasstrangs 5 ist noch eine Drosselklappe 10 vorgesehen, die die Ladeluftstrecke in einen stromauf gelegenen, häufig als Druckrohr bezeichneten Abschnitt sowie einen stromab gelegenen, häufig als Saugrohr bezeichneten Abschnitt unterteilt.

Im Betrieb der Brennkraftmaschine wird in bekannter Weise in definierter Reihenfolge in Brennräumen 11 des Verbrennungsmotors 6, die teilweise von Zylindern 12 des Verbrennungsmotors 6 begrenzt sind, Gemischmengen verbrannt. Diese Gemischmengen bestehen aus Frischgas, das vollständig oder hauptsächlich aus Umgebungsluft besteht und über einen Luftfilter 13 aus der Umgebung angesaugt worden ist, sowie vollständig oder hauptsächlich aus beispielsweise direkt mittels Kraftstoffinjektoren 14 in die Brennräume 11 eingespritztem Kraftstoff. Die durch die Verbrennungsprozesse erzeugten Druckerhöhungen in den Brennräumen 11 werden dazu genutzt, in den Zylindern 12 geführte Kolben 15 zu bewegen. Diese Bewegungen der Kolben 15 werden unter Zwischenschaltung von Pleueln (nicht dargestellt) in eine Drehbewegung einer Kurbelwelle (nicht dargestellt) gewandelt, wobei die Führung der Kolben 15 über die Pleuel mittels der Kurbelwelle gleichzeitig zu einer zyklischen Hin-und-her-Bewegung der Kolben 15 führt. Das bei der Verbrennung der Frischgas-Kraftstoff-Gemischmengen in den Brennräumen 11 entstandene Abgas wird über den Abgasstrang 9 abgeführt und durchströmt dabei die Abgasturbine 8, was zu einem drehenden Antrieb eines Turbinenlaufrads (nicht dargestellt) führt. Diese Drehung des Turbinenlaufrads wird mittels einer Welle 16 auf ein Verdichterlaufrad (nicht dargestellt) des Frischgasverdichters 7 übertragen, wodurch der Frischgasverdichter 7 für eine Verdichtung des über den Frischgasstrang 5 dem Verbrennungsmotor 6 zuzuführenden Frischgases sorgt.

Der Kraftstoffdampffilter 3 des Kraftstofftanksystems steht mit seiner bezüglich der Entlüftungsleitung 2 und der Spülgasleitung 4 abgewandten Seite (bezogen auf dessen Filterwirkung für Kraftstoffdämpfe) über eine Umgebungsluftleitung 17 mit der Umgebung in gasleitender Verbindung, wozu die Umgebungsluftleitung 17 eine Umgebungsmündung 18 ausbildet.

Der Kraftstofftank 1 ist teilweise mit Kraftstoff gefüllt, wobei in der Regel ein Teil dieses bei normalen Umgebungsbedingungen eigentlich flüssigen Kraftstoffs verdampft ist, so dass in dem Kraftstofftank 1 auch Kraftstoff in gasförmigem Aggregatzustand vorliegt. Ein solches Verdampfen von Kraftstoff in dem Kraftstofftank 1 wird insbesondere durch relativ hohe Umgebungstemperaturen sowie durch eine Verringerung des Umgebungsdrucks, beispielsweise infolge einer Bergfahrt eines die Brennkraftmaschine umfassenden Kraftfahrzeugs, begünstigt. Um einen durch ein solches Verdampfen bedingten, unzulässig hohen Überdruck in dem Kraftstofftank 1 zu vermeiden, ist die Möglichkeit eines Druckausgleichs mit dem Umgebungsdruck über die Entlüftungsleitung 2 und den Kraftstoffdampffilter 3 sowie über die Umgebungsluftleitung 17 gegeben, wobei durch den Kraftstoffdampffilter 3 vermieden wird, dass ein solcher Druckausgleich zu einem Entweichen von Kraftstoffdämpfen in die Umgebung führt.

Ein solches Entlüften des Kraftstofftanks 1 führt zu einer zunehmenden Sättigung des Kraftstoffdampffilters 3, was wiederum bedingt, diesen in regelmäßigen Abständen zu regenerieren. Hierzu ist ein Spülen des Kraftstoffdampffilters 3 vorgesehen, indem Umgebungsluft über die Umgebungsmündung 18 und die Umgebungsluftleitung 17 angesaugt wird. Diese Umgebungsluft durchströmt den Kraftstoffdampffilter 3 in im Vergleich zu der Durchströmung des Kraftstoffdampffilters 3 mittels des dampfförmigen Kraftstoffs bei der Entlüftung des Kraftstofftanks 1 entgegengesetzter Richtung, wodurch in dem Kraftstoffdampffilter 1 absorbierte Kraftstoffmoleküle durch die Umgebungsluft mitgenommen und über die Spülgasleitung 4 in den Frischgasstrang 5 eingebracht werden. Dadurch wird dieser Kraftstoff einer Verbrennung in den Brennräumen 11 des Verbrennungsmotors 6 zugeführt.

Ein solches Spülen des Kraftstoffdampffilters 3 ist lediglich zeitweise und stets während des Betriebs des Verbrennungsmotors 6 vorgesehen, weil nur dann der durch das Spülen des Kraftstoffdampffilters 3 in den Frischgasstrang 5 eingebrachte Kraftstoff auch sicher einer Verbrennung in den Brennräumen 11 zugeführt werden kann. Ein Einbringen in den Frischgasstrang 5 bei einem Nichtbetrieb des Verbrennungsmotors 6 könnte dagegen dazu führen, dass der gasförmige Kraftstoff über Undichtigkeiten des Frischgasstrangs 5 und insbesondere über eine Ansaugöffnung des Frischgasstrangs 5 in die Umgebung entweichen könnte.

In die Spülgasleitung 4 ist ein Tankentlüftungsventil 20 integriert, das möglichst nah an der Mündung 19 der Spülgasleitung 4 in den Frischgasstrang 5 angeordnet oder in diese integriert ist.

Für ein Spülen des Kraftstoffdampffilters 3 ist ein ausreichendes Druckgefälle zwischen einerseits dem Umgebungsdruck und andererseits dem Druck in dem Frischgasstrang 5 im Bereich der Mündung 19 der Spülgasleitung 4 erforderlich. Dieses Druckgefälle liegt aufgrund stark schwankender Drücke in dem Frischgasstrang 5 während eines Betriebs des Verbrennungsmotors 6 gegebenenfalls nicht immer vor. Um jederzeit ein Spülen des Kraftstoffdampffilters 3 zu ermöglichen, so dass sicher eine vollständige Sättigung desselben verhindert werden kann, umfasst das Kraftstofftanksystem der Brennkraftmaschine noch eine in die Spülgasleitung 4 integrierte Spülgasfördervorrichtung 21, die üblicherweise auch als "Spülluftpumpe" bezeichnet wird und die beispielsweise in Form eines Kolbenverdichters, insbesondere als Flügelzellenverdichter, oder als Radialgebläse ausgebildet sein kann. Durch einen Betrieb dieser Spülgasfördervorrichtung 21 kann aktiv Umgebungsluft über die Umgebungsmündung 18 angesaugt werden, die dann den Kraftstoffdampffilter 9 zu dessen Spülung durchströmt und die über die Spülgasfördervorrichtung 21 und das dann zumindest teilweise geöffnete Tankentlüftungsventil 20 bis zu der Mündung 19 der Spülgasleitung 4 gefördert werden kann.

Zumindest die Spülgasfördervorrichtung 21, das Tankentlüftungsventil 20, die Drosselklappe 10 und die Kraftstoffinjektoren 14 sind mittels einer Steuerungsvorrichtung 22 (z.B. in Form einer zentralen Motorsteuerung der Brennkraftmaschine) ansteuerbar. Gleichzeitig empfängt die Steuerungsvorrichtung 22 Messsignale eines in einem Abschnitt zwischen der Spülgasfördervorrichtung 21 und dem Tankentlüftungsventil 20 in die Spülgasleitung 4 integrierten HC-Sensors 23, eines stromab der Abgasturbine 8 in den Abgasstrang 9 integrierten Abgassensors 25, eines stromauf der Mündung 19 der Spülgasleitung 4 in den Frischgasstrang 5 integrierten Massenstromsensors 24 und eines stromab der Mündung 19 in den Frischgasstrang 5 integrierten Drucksensors 26.

Abgas, das bei der Verbrennung der Kraftstoff-Frischgas-Gemischmengen in den Brennräumen 11 des Verbrennungsmotors 6 entstanden ist, umströmt den in den Abgasstrang 9 integrierten Abgassensor 25, der daraufhin ein Messsignal erzeugt, das beispielsweise den Anteil an Restsauerstoff im Abgas wiedergibt. Dieses Messsignal wird an die Steuerungsvorrichtung 22 übertragen.

Bei einer Spülung des Kraftstofftanksystems wird der Massenstrom an Kraftstoff beziehungsweise an Kohlenwasserstoffen, der aus der Spülgasleitung 4 in den Frischgasstrang 5 eingeleitet wird, ermittelt. Hierzu wird einerseits der Massenstrom des in der Spülgasleitung 4 strömenden Spülgases durch einen Vergleich der Massenströme des Frischgases, die durch den Frischgasstrang 5 strömen und dabei einerseits mittels des stromauf der Mündung 19 der Spülgasleitung 4 angeordneten Massenstromsensors 24 und andererseits mittels des stromab der Mündung 19 angeordneten Drucksensors 26 ermittelt werden. Andererseits wird der Gehalt beziehungsweise die Konzentration der Kohlenwasserstoffe in diesem Spülgas mittels des HC-Sensors 23 gemessen.

Um diese zusätzliche Masse an Kraftstoff, die als Teil des Spülgases und damit auch des Frischgases in die Brennräume 11 gelangt, zu kompensieren, werden die einzelnen Mengen des mittels der Kraftstoffinjektoren 14 in die Brennräume 11 eingebrachten Kraftstoffs entsprechend angepasst, um unter Berücksichtigung des konkreten Betriebszustands des Verbrennungsmotors 6 und der dabei den Brennräumen 11 zugeführten Frischgasmassen ein definiertes, insbesondere stöchiometrisches Verbrennungsluftverhältnis einzuhalten. Ob dieses Verbrennungsluftverhältnis tatsächlich eingehalten wurde, wird mittels des Abgassensors 25 kontrolliert. Ergibt sich eine Abweichung des ermittelten Verbrennungsluftverhältnisses, das aus einer mittels des Abgassensors 25 ermittelten Abgaszusammensetzung hergeleitet wurde, von einem dazugehörigen Sollwert, wird, sofern die Abweichung unterhalb eines Schwellenwerts liegt oder diesem Schwellwert entspricht, eine entsprechende Korrektur des Messwerts des HC-Sensors 23 oder des aus diesem Messwert ermittelten Kraftstoffmassenstroms derart durchgeführt, dass das ermittelte Verbrennungsluftverhältnis dem Sollwert entspricht. Liegt diese Abweichung dagegen oberhalb des Schwellenwerts, wird der HC-Sensor 23 als defekt ermittelt. Dies kann zu einer entsprechenden Fehlermeldung führen, die in der Steuerungsvorrichtung abgespeichert und gegebenenfalls auch durch eine Anzeige in der Instrumententafel eines Kraftfahrzeugs sichtbar gemacht werden kann.

Wird dagegen kein Spülen des Kraftstoffdampffilters 3 beziehungsweise des gesamten Kraftstofftanksystems durchgeführt, wird kein Spülgas über die Spülgasleitung 4 geführt und damit auch nicht in den Frischgasstrang 5 eingeleitet. Den Brennräumen 11 werden dann die für den vorgesehenen Betrieb des Verbrennungsmotors 6 erforderlichen Kraftstoffmengen ausschließlich mittels der Kraftstoffinjektoren 14 zugeführt. Diese Kraftstoffmengen sind beispielsweise aus dem Druck des den Kraftstoffinjektoren 14 zugeführten Kraftstoffs sowie aus der Dauer der Ansteuerung der Kraftstoffinjektoren 14 mittels der Steuerungsvorrichtung 22 und damit der jeweiligen Öffnungsdauer der Kraftstoffinjektoren 14 ausreichend exakt ermittelbar.

Auch der gleichzeitig den Brennräumen 11 zugeführte Frischgasmassenstrom ist mittels des Massenstromsensors 14 und/oder des Drucksensors 16 ausreichend exakt ermittelbar, wobei diese beiden Sensoren dann gleiche oder vergleichbare Werte liefern sollten. Dementsprechend kann während eines Betriebs der Brennkraftmaschine bei deaktivierter Spülung des Kraftstofftanksystems das Verbrennungsluftverhältnis der den Brennräumen 11 zugeführten Kraftstoff-Frischgas-Gemischmengen relativ exakt eingestellt werden. Kommt es daher während eines solchen Betriebs der Brennkraftmaschine bei deaktivierter Spülung des Kraftstofftanksystems zu Abweichungen der mittels des Abgassensors 25 ermittelten Abgaszusammensetzung von einer solchen, die eigentlich dem eingestellten Verbrennungsluftverhältnis entsprechen sollte, kann eine Spülung des Kraftstofftanksystems als Ursache für diese Abweichung ausgeschlossen werden, weil eine solche Spülung nicht durchgeführt wird. Dies ermöglicht, durch die Generierung eines Adaptionswerts den Messwert des Abgassensors 25 entsprechen anzupassen beziehungsweise zu eichen, so dass dieser geeichte Messwert einer Abgaszusammensetzung entspricht, die zu dem eingestellten Verbrennungsluftverhältnis passt. Mittels einer solchen Eichung des Messwerts des Abgassensors kann dann sichergestellt werden, dass bei einem sich anschließenden Spülen des Kraftstofftanksystems Abweichungen des Verbrennungsluftverhältnisses der den Brennräumen 11 zugeführten Kraftstoff-Frischgas-Gemischmengen von einem dazugehörigen Sollwert, die unter Verwendung der mittels des Abgassensors 25 gemessenen Abgaszusammensetzung ermittelt wurden, Messfehlern des HC-Sensors 23 zugeordnet werden können. Denn Fehler bei der Ermittlung der über die Kraftstoffinjektoren 14 eingebrachten Kraftstoffmengen, bei der Ermittlung der Massenströme des über den Frischgasstrang geführten Frischgases sowie bei der Ermittlung des Massenstroms des über die Spülgasleitung 4 geführten und in den Frischgasstrang eingebrachten Spülgases wurden bei der Eichung während des Betriebs der Brennkraftmaschine bei deaktivierter Spülung des Kraftstofftanksystems adaptiert.

### Bezugszeichenliste

- 1: Kraftstofftank
- 2: Entlüftungsleitung
- 3: Kraftstoffdampffilter
- 4: Spülgasleitung
- 5: Frischgasstrang
- 6: Verbrennungsmotor
- 7: Frischgasverdichter
- 8: Abgasturbine
- 9: Abgasstrang
- 10: Drosselklappe
- 11: Brennraum
- 12: Zylinder
- 13: Luftfilter
- 14: Kraftstoffinjektor
- 15: Kolben
- 16: Welle
- 17: Umgebungsluftleitung
- 18: Umgebungsmündung
- 19: Mündung der Spülgasleitung
- 20: Tankentlüftungsventil
- 21: Spülgasfördervorrichtung
- 22: Steuerungsvorrichtung
- 23: HC-Sensor
- 24: Massenstromsensor
- 25: Abgassensor
- 26: Drucksensor

## Patentansprüche

1. Verfahren zum Betreiben einer Brennkraftmaschine, die
- einen Verbrennungsmotor (6) mit mindestens einem Brennraum (11),
- einen Frischgasstrang (5),
- einen Abgasstrang (9) mit darin integriertem Abgassensor (25) und
- ein Kraftstofftanksystem
aufweist, wobei das Kraftstofftanksystem
- einen Kraftstofftank (1),
- einen Kraftstoffdampffilter (3), der in fluidleitender Verbindung mit einer Umgebungsmündung (18) steht,
- eine von dem Kraftstofftank (1) zu dem Kraftstoffdampffilter (3) führende Entlüftungsleitung (2) und
- eine von dem Kraftstoffdampffilter (3) zu dem Frischgasstrang (5) führende Spülgasleitung (4), in die
- ein HC-Sensor (23) und
- ein Tankentlüftungsventil (20) und/oder eine Spülgasfördervorrichtung (21) integriert sind,
umfasst, wobei im Betrieb der Brennkraftmaschine bei über die Spülgasleitung (4) geführtem Spülgas
- der Kohlenwasserstoffgehalt des Spülgases mittels des HC-Sensors (23) sowie der Massenstrom des Spülgases und aus diesen Werten in Kombination ein Kraftstoffmassenstrom, der in den Frischgasstrang eingeleitet wird, ermittelt werden, und
- eine Menge von mittels mindestens eines Kraftstoffinjektors in den Brennraum (11) und/oder in den Frischgasstrang (5) eingebrachtem Kraftstoff angepasst wird, wobei aus einer mittels des Abgassensors (25) ermittelten Abgaszusammensetzung das Verbrennungsluftverhältnis von Kraftstoff-Frischgas-Gemischmengen, die dem Brennraum zugeführt wurden, hinsichtlich einer Abweichung von einem Sollwert überwacht wird, **dadurch gekennzeichnet, dass** bei der Ermittlung einer solchen Abweichung eine Korrektur des Messwerts des HC-Sensors (23) oder des daraus ermittelten Kraftstoffmassenstroms durchgeführt oder der HC-Sensor (23) als defekt ermittelt wird, wobei eine Korrektur des Messsignals des HC-Sensors (23) oder des daraus ermittelten Kraftstoffmassenstroms durchgeführt wird, sofern die Abweichung unterhalb eines Schwellenwerts liegt oder diesem Schwellenwert entspricht, und der HC-Sensor (23) als defekt ermittelt wird, sofern die Abweichung oberhalb eines oder des Schwellenwerts liegt.

2. Verfahren gemäß Anspruch 1, **dadurch gekennzeichnet, dass** im Betrieb der Brennkraftmaschine bei deaktivierter Spülung des Kraftstofftanksystems eine Eichung des Messwerts des Abgassensors (25) durchgeführt wird.

3. Verfahren gemäß einem der vorhergehenden Ansprüche, **dadurch gekennzeichnet, dass** im Betrieb der Brennkraftmaschine bei deaktivierter Spülung des Kraftstofftanksystems eine Eichung des Messwerts eines Sensors, der zur Ermittlung des Massenstroms des Spülgases genutzt wird, durchgeführt wird.

4. Verfahren gemäß einem der vorhergehenden Ansprüche, **dadurch gekennzeichnet, dass** der Massenstrom des Spülgases gemessen oder modelliert wird.

5. Brennkraftmaschine mit
- einem Verbrennungsmotor (6) mit mindestens einem Brennraum (11),
- einem Frischgasstrang (5),
- einem Abgasstrang (9) mit darin integriertem Abgassensor (25),
- einem Kraftstofftanksystem, das
- einen Kraftstofftank (1),
- einen Kraftstoffdampffilter (3), der in fluidleitender Verbindung mit einer Umgebungsmündung (18) steht,
- eine von dem Kraftstofftank (1) zu dem Kraftstoffdampffilter (3) führende Entlüftungsleitung (2),
- eine von dem Kraftstoffdampffilter (3) zu dem Frischgasstrang (5) führende Spülgasleitung (4), in die
- ein HC-Sensor (23) und
- ein Tankentlüftungsventil (20) und/oder eine Spülgasfördervorrichtung (21)
- integriert sind, und
- einer Steuerungsvorrichtung (22),
**dadurch gekennzeichnet, dass** die Steuerungsvorrichtung (22) zur automatisierten Durchführung eines Verfahrens gemäß einem der vorhergehenden Ansprüche eingerichtet ist.

6. Brennkraftmaschine gemäß Anspruch 5, **gekennzeichnet durch** einen Sensor (24; 26) zur Ermittlung des Massenstroms des Spülgases.

7. Kraftfahrzeug mit einer Brennkraftmaschine gemäß einem der Ansprüche 5 oder 6.

## Claims

1. Method for operating an internal combustion engine comprising
- a combustion unit (6) having at least one combustion chamber (11),
- a fresh gas system (5),
- an exhaust gas system (9) having an exhaust gas sensor (25) integrated therein, and
- a fuel tank system,
wherein the fuel tank system has
- a fuel tank (1),
- a fuel vapor filter (3) which is connected to a surroundings opening (18) in a fluid-conducting manner,
- a vent line (2) leading from the fuel tank (1) to the fuel vapor filter (3), and
- a purge gas line (4) leading from the fuel vapor filter (3) to the fresh gas system (5), in which
- a **HC** sensor (23) and
- a tank vent valve (20) and/or a purge gas conveying device (21) are integrated,
wherein during operation of the internal combustion engine, when purge gas is conducted via the purge gas line (4),
- the hydrocarbon content of the purge gas is determined by means of the **HC** sensor (23), as well as the mass flow of the purge gas, and, from these values in combination, a fuel mass flow which is introduced into the fresh gas system is determined, and
- an amount of fuel introduced into the combustion chamber (11) and/or into the fresh gas system (5) by means of at least one fuel injector is adjusted,
wherein the air-fuel equivalence ratio of fuel-fresh gas mixture amounts which are supplied to the combustion chamber is monitored, with respect to a deviation from a target value, from an exhaust gas composition determined by means of the exhaust gas sensor (25), **characterized in that**
when such a deviation is determined, a correction of the measured value of the HC sensor (23) or the fuel mass flow determined therefrom is carried out, or the HC sensor (23) is determined to be defective,
wherein a correction of the measurement signal from the HC sensor (23) or of the fuel mass flow determined therefrom is carried out if the deviation is below a threshold value or corresponds to this threshold value, and the HC sensor (23) is determined to be defective if the deviation is above a or the threshold value.

2. Method according to claim 1, **characterized in that,** during operation of the internal combustion engine, when the purging of the fuel tank system is deactivated, a calibration of the measured value of the exhaust gas sensor (25) is carried out.

3. Method according to either of the preceding claims, **characterized in that,** during operation of the internal combustion engine, when the purging of the fuel tank system is deactivated, a calibration of the measured value of a sensor that is used to determine the mass flow of the purge gas is carried out.

4. Method according to any of the preceding claims, **characterized in that** the mass flow of the purge gas is measured or modeled.

5. Internal combustion engine comprising
- a combustion unit (6) having at least one combustion chamber (11),
- a fresh gas system (5),
- an exhaust gas system (9) having an exhaust gas sensor (25) integrated therein,
- a fuel tank system which has
- a fuel tank (1),
- a fuel vapor filter (3) which is connected to a surroundings opening (18) in a fluid-conducting manner,
- a vent line (2) leading from the fuel tank (1) to the fuel vapor filter (3),
- a purge gas line (4) leading from the fuel vapor filter (3) to the fresh gas system (5), in which
- a HC sensor (23) and
- a tank vent valve (20) and/or a purge gas conveying device (21)
- are integrated, and comprising
- a control device (22),
**characterized in that** the control device (22) is designed to carry out a method according to any of the preceding claims in an automated manner.

6. Internal combustion engine according to claim 5, **characterized by** a sensor (24; 26) for determining the mass flow of the purge gas.

7. Motor vehicle comprising an internal combustion engine according to either of claims 5 or 6.

## Revendications

1. Procédé permettant de faire fonctionner un moteur à combustion interne qui présente
- un moteur à combustion interne (6) comportant au moins une chambre de combustion (11),
- un tronçon de gaz frais (5),
- un tronçon de gaz d'échappement (9) comportant un capteur de gaz d'échappement (25) intégré dans celui-ci et
- un système à réservoir de carburant,
dans lequel le système à réservoir de carburant comprend
- un réservoir de carburant (1),
- un filtre à vapeur de carburant (3) qui est en liaison par communication de fluide avec une embouchure vers l'environnement (18),
- une conduite de dégazage (2) conduisant du réservoir de carburant (1) au filtre à vapeur de carburant (3),
- une conduite de gaz de purge (4) conduisant du filtre à vapeur de carburant (3) au tronçon de gaz frais (5), dans laquelle sont intégrés
- un capteur HC (23) et
- une soupape de dégazage de réservoir (20) et/ou un dispositif de transport de gaz de purge (21),
dans lequel, pendant le fonctionnement du moteur à combustion interne, lorsque le gaz de purge est transporté par l'intermédiaire de la conduite de gaz de purge (4),
- la teneur en hydrocarbures du gaz de purge est déterminée au moyen du capteur HC (23) ainsi que le débit massique du gaz de purge et, à partir de ces valeurs combinées, un débit massique de carburant qui est introduit dans le tronçon de gaz frais est déterminé, et
- une quantité de carburant introduit dans la chambre de combustion (11) et/ou dans le tronçon de gaz frais (5) au moyen d'au moins un injecteur de carburant est adaptée,
dans lequel, à partir d'une composition de gaz d'échappement déterminée au moyen du capteur de gaz d'échappement (25), le rapport d'air de combustion de quantités de mélange carburant-gaz frais qui ont été amenées à la chambre de combustion est surveillé quant à un écart par rapport à une valeur de consigne, **caractérisé en ce que**
lors de la détermination d'un tel écart, une correction de la valeur de mesure du capteur HC (23) ou du débit massique de carburant déterminé à partir de celle-ci est réalisée, ou le capteur HC (23) est déterminé comme étant défectueux,
dans lequel une correction du signal de mesure du capteur HC (23) ou du débit massique de carburant déterminé à partir de celle-ci est réalisée dans la mesure où l'écart est inférieur à une valeur seuil ou correspond à ladite valeur seuil, et le capteur HC (23) est déterminé comme étant défectueux dans la mesure où l'écart est supérieur à une valeur seuil ou à la valeur seuil.

2. Procédé selon la revendication 1, **caractérisé en ce qu'**un étalonnage de la valeur de mesure du capteur de gaz d'échappement (25) est réalisé pendant le fonctionnement du moteur à combustion interne lorsque la purge du système à réservoir de carburant est désactivée.

3. Procédé selon l'une des revendications précédentes,
**caractérisé en ce que,** pendant le fonctionnement du moteur à combustion interne, lorsque la purge du système à réservoir de carburant est désactivée, un étalonnage de la valeur de mesure d'un capteur utilisé pour déterminer le débit massique du gaz de purge est réalisé.

4. Procédé selon l'une des revendications précédentes,
**caractérisé en ce que** le débit massique du gaz de purge est mesuré ou modélisé.

5. Moteur à combustion interne comportant
- un moteur à combustion interne (6) comportant au moins une chambre de combustion (11),
- un tronçon de gaz frais (5),
- un tronçon de gaz d'échappement (9) comportant un capteur de gaz d'échappement (25) intégré dans celui-ci,
- un système à réservoir de carburant qui comprend
- un réservoir de carburant (1),
- un filtre à vapeur de carburant (3) qui est en liaison par communication de fluide avec une embouchure vers l'environnement (18),
- une conduite de dégazage (2) conduisant du réservoir de carburant (1) au filtre à vapeur de carburant (3),
- une conduite de gaz de purge (4) conduisant du filtre à vapeur de carburant (3) au tronçon de gaz frais (5), dans laquelle sont intégrés
- un capteur HC (23) et
- une soupape de dégazage de réservoir (20) et/ou un dispositif de transport de gaz de purge (21),
- et
- un dispositif de commande (22),
**caractérisé en ce que** le dispositif de commande (22) est configuré pour la réalisation automatique d'un procédé selon l'une des revendications précédentes.

6. Moteur à combustion interne selon la revendication 5, **caractérisé par** un capteur (24 ; 26) permettant de déterminer le débit massique du gaz de purge.

7. Véhicule automobile comportant un moteur à combustion interne selon l'une des revendications 5 ou 6.
